Europäisches Patentamt

European Patent Office

Office européen des brevets

(11) Veröffentlichungsnummer: **0 144 732**
**B1**

(12) **EUROPÄISCHE PATENTSCHRIFT**

(45) Veröffentlichungstag der Patentschrift:
07.06.89

(21) Anmeldenummer: 84113187.3

(22) Anmeldetag: 02.11.84

(51) Int. Cl.⁴: **G 02 B 21/24**, G 02 B 7/11,
G 02 B 21/26

(54) Einrichtung zum automatischen Fokussieren von optischen Geräten.

(30) Priorität: 04.11.83 DE 3339970

(43) Veröffentlichungstag der Anmeldung:
19.06.85 Patentblatt 85/25

(45) Bekanntmachung des Hinweises auf die Patenterteilung: 07.06.89 Patentblatt 89/23

(84) Benannte Vertragsstaaten:
AT CH DE FR GB IT LI NL

(56) Entgegenhaltungen:
DE—A— 3 228 609
DE—B— 2 102 922
US—A— 4 153 834

(73) Patentinhaber: Karl Süss KG Präzisionsgeräte für Wissenschaft und Industrie - GmbH & Co.
Schleissheimer Strasse 90 Postfach 1809
D-8046 Garching bei München (DE)

(72) Erfinder: Gorgon, Georg
Primelstrasse 12
D-8039 Puchheim (DE)

(74) Vertreter: Vossius & Partner
Siebertstrasse 4 P.O. Box 86 07 67
D-8000 München 86 (DE)

**Beschreibung**

Die Erfindung betrifft eine Einrichtung zum automatischen Fokussieren von optischen Geräten, insbesondere von Mikroskopen, gemäß dem Oberbegriff des Anspruchs 1.

Eine ähnliche Autofokuseinrichtung ist aus der DE-B-2 102 922 bekannt, bei der durch ein Meßstrahlenbündel eine Meßblende in die Objektebene abgebildet wird und bei der in einer zur Bildebene des Geräts konjugierten Ebene eine zur Meßblende komplementäre Dunkelmarke angeordnet ist. Um eine Beeinflussung des sichtbaren Bildes zu vermeiden, wird dabei für das Meßstrahlenbündel unsichtbares Licht (z. B. IR-Licht) verwendet, so daß für dieses Licht geeignete Bauelemente verwendet werden müssen.

Aus der DE-AS 22 34 448 ist eine Autofokuseinrichtung für Mikroskope bekannt, bei der ein im Abbildungsstrahlengang des optischen Gerätes angeordneter Fotowiderstand ein Signal an einen Schaltkreis abgibt, das bei maximaler Scharfeinstellung (Fokussierung) einen Scheitelwert hat. Mit diesem Autofokussignal wird ein Antrieb zur Erzeugung einer relativen Bewegung zwischen der Objekt- und der Schärfenebene angesteuert. Die Fokussierung, d. h. die Übereinstimmung von Objekt- und Schärfenebene, ergibt sich dabei aus dem Scheitelwert des Autofokussignals. Das Autofokussignal selbst wird dabei unmittelbar aus der Abbildung des Objektes gewonnen, d. h. es wird die Helligkeitsänderung des Objektbildes in Abhängigkeit vom Fokussierungsgrad direkt ermittelt und als Autofokussignal verwendet. Zur Verbesserung des Meßergebnisses wird als Referenzwert der fokussierungsunabhängige Helligkeitswert mit Hilfe eines weiteren Fotodetektors ermittelt, der durch ein streuendes Mattglas abgedeckt ist.

Aus der DE-AS 24 43 167 ist ebenfalls eine Einrichtung zum automatischen Fokussieren von Mikroskopen bekannt, bei der ein Laserstrahl über die Auflichteinrichtung in das Mikroskop eingespiegelt und im Auflichtkondensor gebündelt wird. Dieser Laser-Lichtpunkt wird vom Objektiv genau in dessen Schärfenebene, mit der die Objektebene zusammenfallen soll, abgebildet. Liegt die Objektebene jedoch nicht in der Schärfenebene, so verschwimmt der Lichtpunkt auf der Objektebene zu einem mehr oder weniger großen Fleck. Stellt man bei dieser bekannten Einrichtung den auf das Objekt fallenden Laser-Lichtfleck auf kleinsten Durchmesser ein, so ist damit auch das Objekt im Mikroskop scharf eingestellt.

In der Zwischenbildebene, wo das Bild des Objekts erscheint, mißt ein kleinflächiger Fotodetektor die Helligkeit im Bild des Laser-Lichtflecks. Kleine Helligkeit bedeutet, daß der Lichtfleck groß und damit das Mikroskop unscharf eingestellt ist. Bei größter Helligkeit ist der Lichtfleck am kleinsten und damit die scharfe Einstellung angezeigt. Zur automatischen Scharfeinstellung steuert eine elektronische, analoge Schaltung den Motor für die Höhenverstellung des Objektischez solange, bis der Fotodetektor größte Helligkeit bekommt. Diese bekannte Einrichtung ist wegen der Notwendigkeit eines Lasers relativ aufwendig.

Gegenüber der eingangs genannten DE-B-2 102 922 liegt der Erfindung die Aufgabe zugrunde, eine einfache und dennoch genau arbeitende automatische Fokussiereinrichtung anzugeben.

Bei der Lösung dieser Aufgabe geht die Erfindung von dem Grundgedanken aus, die Meßblende so anzuordnen, daß ihr Bild nicht im Gesichtsfeld des optischen Geräts erscheint, und zwar dadurch, daß die Meßblende gegenüber der optischen Achse des optischen Geräts seitlich so weit versetzt ist, daß ihr Bild im Okular außerhalb des Sehfeldes ist.

Dieses Zwischenbild der Meßblende wird dann an einer geeigneten Stelle des optischen Gerätes mittels geeigneten Detektoren gegebenenfalls unter Zuhilfenahme von Detektorblenden abgetastet. Das sich bei der Fokussierungsbewegung der Autofokuseinrichtung ergebende Ausgangssignal des Detektors wird als sogenanntes Autofokussignal, das beim Durchlauf der Objektebene durch die Schärfenebene einen Spitzenwert durchläuft, einer Steuereinrichtung zugeführt, mit der ein Antrieb für die Fokussierungsbewegung zwischen dem Objekt und dem optischen Gerät angesteuert wird. Die Steuereinrichtung erkennt den Spitzenwert des Autofokussignals als Scharfeinstellungsposition.

So wird mit Hilfe eines Meßstrahlbündels, beispielsweise als Teil der Beleuchtungsstrahlung einer üblichen Beleuchtungseinrichtung des Mikroskops, eine Meßblende in den Strahlengang des optischen Gerätes abgebildet, und zwar so, daß bei Scharfeinstellung ein Zwischenbild der Meßblende in der Objektebene und damit auch in der Schärfenebene liegt. Dieses Zwischenbild der Meßblende wird dann über den Hauptstrahlengang des optischen Geräts mit dem Objekt erneut abgebildet und dort durch eine geeignete Detektoranordnung zur Auswertung der Fokussierungsgüte abgetastet. Zur Vereinfachung bzw. Erleichterung der Anordnung des Detektors kann zumindest der Teil der die Meßblende abbildenden Strahlung aus dem Hauptstrahlengang mit Hilfe eines teildurchlässigen Spiegels ausgekoppelt und so auf einen außerhalb des Hauptstrahlengangs angeordneten Detektor abgebildet werden.

In der einfachsten Ausführungsform ist vor dem Detektor eine Detektorblende angeordnet, die komplementär zur Meßblende ausgeführt ist, beispielsweise bei abdeckender Meßblende als Lochblende ausgeführt ist.

Beim Scharfeinstellen des optischen Gerätes auf das Objekt erhält man dann im Sinne der Erfindung am Ausgang des Detektors ein Autofokussignal, das beim Durchlauf der Objektebene durch die Schärfenebene des optischen Geräts einen Spitzenwert hat, auf den die Steuereinrichtung für den Fokussierungsantrieb optimiert. Alternative Ausführungsbeispiele für die Kombination aus Detektorblende und Detektor werden beispielhaft noch weiter unten erläutert.

Die erfindungsgemäße Autofokuseinrichtung ermöglicht mit einfachen Mitteln eine sehr genaue, automatische Scharfeinstellung, die auch hohen Ansprüchen an die Einstellgenauigkeit des Objektträgers bei sehr geringen Schärfentiefen des optischen Gerätes genügt. So sind beispielsweise Einstellgenauigkeiten des Objektträgers bezüglich des optischen Gerätes in der Größenordnung von 0,2 µm und weniger ohne weiteres möglich. Darüber hinaus ist keine zusätzliche Beleuchtungseinrichtung, beispielsweise in Form eines Lasers, erforderlich, da die übliche Beleuchtungseinrichtung des optischen Gerätes verwendet werden kann, wobei lediglich an geeigneter Stelle in dem Beleuchtungsstrahlengang eine geeignet geformte Meßblende eingesetzt wird.

Wie vorstehend bereits angedeutet, kann in den Hauptstrahlengang des optischen Gerätes zwischen Objektiv und Okular ein Strahlteiler, z. B. in Form eines teildurchlässigen Spiegels angeordnet werden, um das die Abbildung der Meßblende enthaltende Strahlenbündel aus dem Hauptstrahlengang auszukoppeln und auf die aus Detektorblende und Detektor bestehende Meßanordnung zum Erzeugen eines Autofokussignals zu projizieren. Dadurch wird der Detektoraufbau mit gegebenenfalls vorgeschalteter Detektorblende vereinfacht, da räumliche Beschränkungen durch den Hauptstrahlengang, insbesondere durch das Okular, weitgehend eliminiert werden.

Nachstehend werden zwei alternative Ausführungsbeispiele optischer Geräte erläutert, bei denen die übliche Objektbeleuchtung unterschiedlich ist, und zwar mit Durchlicht bzw. Auflicht :

Bei der Beleuchtung mit Durchlicht, bei der das Beleuchtungsstrahlenbündel im wesentlichen koaxial zur optischen Achse durch das Objekt in das Objektiv des optischen Gerätes eingestrahlt wird, wird die erfindungsgemäße Meßblende in vorteilhafter Weise in Strahlrichtung vor dem Kondensor der Beleuchtungseinrichtung angeordnet, der sich wiederum in Strahlrichtung vor dem (durchsichtigen) Objektträger befindet. Zur Vorbereitung der automatischen Fokussierung wird zunächst das erste Zwischenbild der Meßblende mit Hilfe des Kondensors auf die vorgesehene Objektebene fest voreingestellt. Objekt, Objektträger, Kondensor und Meßblende können gemeinsam unter Beibehaltung ihres gegenseitigen Abstandes relativ zum optischen Gerät, beispielsweise dem Mikroskop, in Richtung der optischen Achse mit Hilfe eines Antriebs bewegt werden. Das sich in der Objektebene befindliche Zwischenbild der Meßblende wird mit Hilfe des optischen Geräts auf die Detektorblende nur dann scharf abgebildet, wenn Objektebene und Schärfenebene zusammenfallen. Bei der mit dem Antrieb bewirkten Relativbewegung durchläuft dann das Autofokussignal des Detektors einen Spitzenwert, auf den sich die Anordnung zum Scharfeinstellen automatisch einstellt.

Beim Betrieb des optischen Geräts mit Auflicht wird die Meßblende vorzugsweise ebenfalls in den Beleuchtungsstrahlengang vor die Kondensorlinse eingesetzt, so daß sich ein Zwischenbild in der Schärfenebene des optischen Geräts ergibt. Befindet sich die Objektebene ebenfalls in der Schärfenebene, so wird das Blendenzwischenbild von der Objektebene reflektiert und auf die Detektorblende scharf abgebildet. Dies bedeutet, daß das Autofokussignal des Detektors den Spitzenwert annimmt, während bei Defokussierung d. h. bei Versatz der Objektebene aus der Schärfenebene das Blendenzwischenbild defokussiert auf der Objektebene auftrifft, dort reflektiert und entsprechend unscharf auf die Detektorblende abgebildet wird. Das Autofokussignal des Detektors weicht dann vom Spitzenwert ab. Die Steuerung des Antriebs für den Objektträger relativ zum optischen Gerät mit Hilfe des Autofokussignals erfolgt dann in der vorstehend erläuterten Weise.

Wie vorstehend ausgeführt, können die Meßblende als Lochblende oder als Abdeckblende und die Detektorblende als dazu komplementäre Abdeck- bzw. Lochblende ausgebildet sein. Ferner ist es möglich, die Meßblende als einseitige Blende auszubilden, so daß auch die Detektorblende zweckmäßigerweise als entsprechend komplementäre einseitige Blende ausgebildet wird.

Bei einer bevorzugten Ausführungsform ist die Meßblende bezüglich des Sehfeldes als azimutale Blende ausgebildet ; dabei besteht die Detektorblende aus zwei Detektorblendenabschnitten, deren azimutaler Abstand der Breite des Meßblendenbildes am Ort der Detektorblende entspricht. Derartige azimutale Blenden haben den Vorteil, daß keine Farbfehler auftreten, während bei radialen Blenden, d. h. mit radialem Abstand der Blendenkanten der Farbfehler zum Linsenrand hin zunimmt.

Um bei einer bestimmten Ausgangsposition der Relativlage zwischen der Objektebene und der Schärfenebene feststellen zu können, in welche Richtung die Fokussierungsbewegung erfolgen muß, ist es bei Verwendung einer Detektorblende erforderlich, zunächst eine Testbewegung auszuführen, um festzustellen, in welcher Richtung der gesuchte Spitzenwert des Autofokussignals liegt. Ändert sich bei dieser Testbewegung das Autofokussignal nicht im Sinne auf den Spitzenwert hin, so ist die Fokussierungsbewegung umzukehren.

Um diese Testbewegung einzusparen, können vorzugsweise mehrere in unterschiedlichen Bildebenen angeordnete Detektorblenden mit zugehörigen Detektoren vorgesehen sein, aus deren unterschiedlichen Autofokussignalen die erforderliche Fokussierungsrichtungsbewegung, d. h. die notwendige Stellrichtung, abgeleitet werden kann.

Erfindungsgemäß weist die die Stellbewegung steuernde Steuereinrichtung einen das Autofokussignal verstärkenden, regelbaren Verstärker und einen Analog- oder Digitalrechner zum Weiterverarbeiten des verstärkten Autofokussignals und Erzeugen des Stellsignals für den Antrieb auf. Dabei wird vorzugsweise vom Rechner ein Regelsignal für den Verstärker erzeugt, um bei unterschiedlichen Beleuchtungsverhältnissen oder schwankenden Reflektivitäten der Objekte stets das gleiche Autofokussignal zu erhalten. Die Ist-Intensität wird dabei mit einer Referenzsonde in der Zwischenbildebene oder vor dem eigentlichen Fokussierungsvorgang mit dem Fokussierungsdetektor gemessen; mit dem so erhaltenen Referenzsignal wird das Ausgangssignal des Verstärkers auf einen Referenzwert verstärkt.

Um Meßfehler weiter auszumitteln, können erfindungsgemäß auch mehrere, insbesondere gleichartige Meßblenden in entsprechenden Ebenen vorgesehen werden, so daß auch entsprechend viele Meßblendenbilder auf zugeordnete Detektorblenden und entsprechende Detektoren abgebildet werden. Dadurch erhält man mehrere Autofokussignale, die nach geeigneter Auswertung als Meßsignal der Steuereinrichtung für den Antrieb zugeführt werden.

Alternativ zu der jeweiligen Detektorblende können auch zwei dicht benachbarte Detektoren vorgesehen werden, die mit Hilfe einer Differenzschaltung ihrer Ausgangssignale im wesentlichen eine Kontrastmessung am Rand des betreffenden Meßblendenbildes ausführen. Maximaler Kontrast bedeutet in diesem Fall optimale Abbildung der Meßblende und damit Scharfeinstellung des optischen Gerätes gegenüber dem Objekt.

Die Erfindung wird nachstehend mit Bezug auf die Zeichnung näher erläutert. Es zeigen:

Fig. 1 eine schematische Darstellung einer ersten erfindungsgemäßen Ausführungsform bei einem Durchlichtmikroskop,

Fig. 2 eine schematische Darstellung einer zweiten Ausführungsform bei einem Auflichtmikroskop,

Fig. 3 eine graphische Darstellung des Autofokussignals,

Fig. 4 ein Blockschaltbild der Steuereinrichtung,

Fig. 5 schematische Darstellungen
a einer einseitigen Meßblende,
b einer zu Fig. 5a komplementären einseitigen Detektorblende, und
c einer Alternative zur Detektorblende mit zwei nahe benachbarten Detektoren zur Kontrastmessung und

Fig. 6 eine schematische Darstellung des Sehfeldes mit Meßblende und komplementärer Detektorblende.

In der nachstehenden Beischreibung wird die Erfindung insbesondere anhand von Mikroskopen erläutert, jedoch kann die erfindungsgemäße automatische Fokussiereinrichtung auch bei anderen optischen Geräten entsprechend eingesetzt werden.

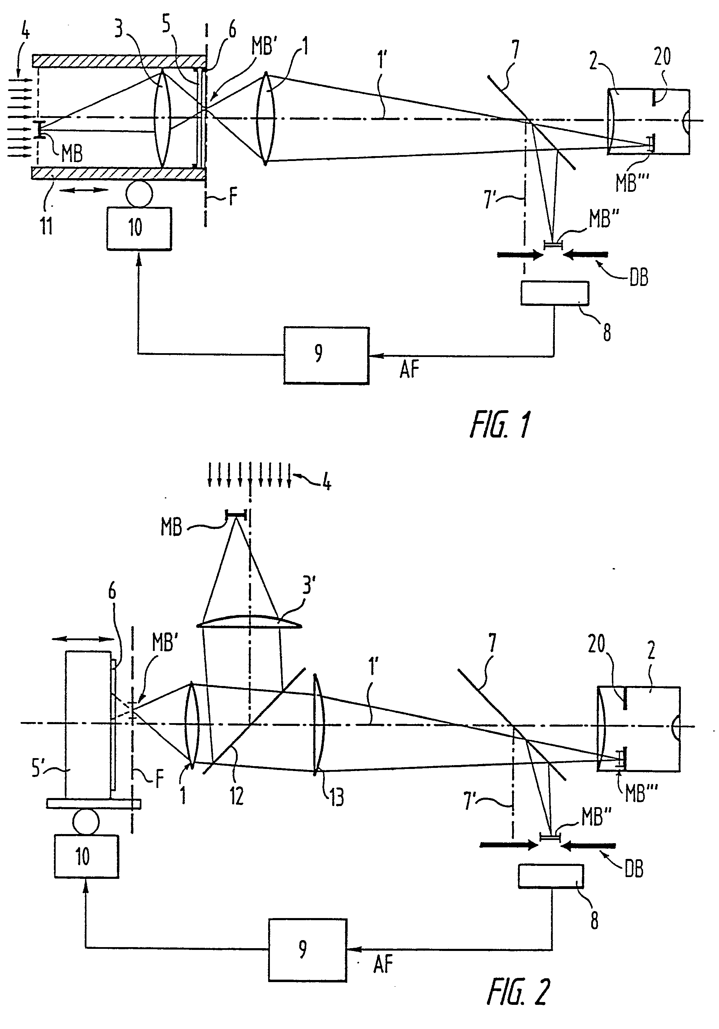

Das in Fig. 1 dargestellte Durchlichtmikroskop weist eine Objektivlinse 1 und ein Okular 2 mit gemeinsamer optischer Achse 1' auf. Die Beleuchtung des Objekts 6 erfolgt mit Hilfe eines parallelen Beleuchtungsstrahlenbündels 4, das durch einen Kondensor 3 zum Beleuchten des Objekts 6 fokussiert wird. Das Objekt 6 wird mit Hilfe eines transparenten Objektträgers 5 in einer definierten Lage relativ zum Kondensor 3 gehalten, und zwar

so, daß die mit dem Mikroskop zu betrachtende Objektebene in der Fokalebene des Kondensors 3 liegt. Mit Hilfe des Beleuchtungsstrahlenbündels wird auch eine im Strahlengang vor dem Kondensor 3 angeordnete Meßblende MB in die Fokalebene des Kondensors 3, d. h. in die Objektebene abgebildet. Dieses Zwischenbild MB' der Meßblende MB dient zur automatischen Fokussierung.

In der Darstellung der Fig. 1 liegt die Objektebene bereits genau in der Schärfenebene F des Mikroskops, d. h. das Mikroskop ist auf das Objekt 6 bereits fokussiert. In dieser Lage wird das Zwischenbild MB' der Meßblende MB durch das Objektiv 1 in das Okular abgebildet, so daß man dort ein weiteres Zwischenbild MB''' erhält. Um das Sehfeld möglichst durch die Meßblende und deren Abbildungen nicht zu beeinträchtigen, wird die Meßblende gegenüber der optischen Achse 1' seitlich versetzt, so daß das Zwischenbild MB''' im Okular auf die Sehfeldblende fällt, d. h. außerhalb des Sehfeldes liegt. Zwischen dem Objektiv 1 und dem Okular 2 ist ein halbdurchlässiger Spiegel 7 als Strahlteiler angeordnet, um einen Teil des Abbildungsstrahlenbündels aus dem Hauptstrahlengang des Mikroskops auszukoppeln und auf eine Detektorblende DB zu richten. Diese Detektorblende DB ist dabei so bemessen und angeordnet, daß der mit dem Spiegel 7 abgelenkte Teil des Zwischenbildes MB'' der Meßblende MB durch die dazu komplementäre Detektorblende DB gerade abgedeckt wird, wenn das Mikroskop auf das Objekt fokussiert ist. Durch die versetzte Anordnung der Meßblende MB gegenüber der optischen Achse 1' ist auch die Detektorblende DB gegenüber der durch den Spiegel 7 abgelenkten optischen Nebenachse 7' versetzt.

Hinter der Detektorblende DB ist ein Fotodetektor 8 angeordnet, der in Abhängigkeit von dem durch die Detektorblende DB dringenden Licht ein Autofokussignal AF erzeugt. Dieses Autofokussignal AF ist im wesentlichen proportional zur einfallenden Lichtintensität.

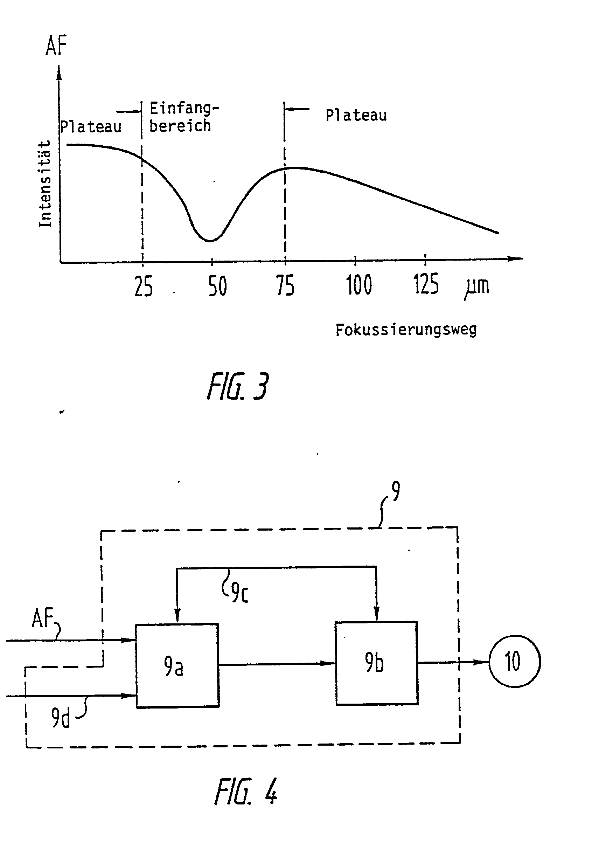

Defokussiert man das Mikroskop gegenüber dem Objekt 6, etwa durch gemeinsames Verschieben von Meßblende MB, Kondensor 3, Objektträger 5 und Objekt 6 nach rechts, und beginnt dann diese Bauteile wieder nach links über die Schärfenebene F hinaus zu verschieben, so erhält man das in Fig. 3 dargestellte Autofokussignal AF in Abhängigkeit vom Fokussierungsweg. Befindet sich das Objekt 6 zu nahe am Objektiv 1, so befindet sich das Zwischenbild MB' der als Abdeckblende ausgebildeten Meßblende MB nicht in der Schärfenebene F des Mikroskops, und man erhält auf der Detektorblende DB kein scharfes Bild MB'' der Meßblende MB, sondern eine stark verschmierte Abbildung. Dadurch tritt Licht durch die Lochblende DB, und die Intensität des Autofokussignals am Detektor 8 ist relativ hoch. Nähert sich das Objekt 6 der Schärfenebene F, so wird die Abbildung MB'' der Meßblende MB in der Lochblende DB zunehmend schärfer, so daß das Autofokussignal des Detektors 8 abnimmt und schließlich bei Fokussierung ein Minimum einnimmt. Durch fortschreitende Bewegung des Objektes 6 von der Linse 1 weg nach links in Fig. 1 wird durch Defokussierung die Abbildung MB″ an der Lochblende DB wieder verschwommen, und das Autofokussignal AF steigt wieder an. In Fig. 3 durchläuft dieses Autofokussignal AF rechts neben dem Kurvenminimum ein Maximum, das etwa der praktisch ungestörten Beleuchtung des Detektors 8 bei starker Defokussierung entspricht.

Wird das Objekt mit der Beleuchtungseinrichtung noch weiter nach links gegenüber dem Objektiv verschoben, so fällt bei bleibender Defokussierung das Autofokussignal im Bereich des sogenannten « Plateaus » ab, da die Helligkeit mit dem Quadrat der Entfernung von der Lichtquelle abnimmt.

Gemäß Fig. 1 wird das Autofokussignal AF des Detektors 8 einer Steuereinrichtung 9 zugeführt, die einen Antrieb 10 zum Bewegen eines Halters oder Tubus 11 in Richtung der optischen Achse 1′ relativ zum Mikroskop ansteuert. In diesem Halter 11 sind die Meßblende MB, die Kondensorlinse 3, der transparente Objektträger 5 sowie das Objekt 6 so gehalten, daß sich bei der Beleuchtung der Meßblende MB deren Zwischenbild MB′ in der Objektebene befindet.

Die Steuereinrichtung 9 spricht auf das Autofokussignal AF derart an, daß es durch Ansteuerung des Antriebs 10 für die Relativbewegung des Halters 11 gegenüber dem Mikroskop den Spitzenwert annimmt (in Fig. 3 das Minimum der Kurve im Einfangsbereich, worunter allgemein der Bereich zu verstehen ist, in dem das System die Richtung für die Fokussierungsbewegung « erkennt » (d. h. an den Plateaugrenzen bei verschwindendem Kontrast des Meßblendenbildes)).

Zu diesem Zweck sorgt die Steuereinrichtung 9 zunächst für eine Testbewegung des Halters 11, beispielsweise durch Vergrößern des Abstandes gegenüber dem Objektiv, um dieses nicht zu beschädigen, so daß die Steuereinrichtung feststellen kann, ob bei dieser Testbewegung das Autofokussignal AF zu- oder abnimmt, die Fokussierungsposition also rechts oder links vom Minimum der Signalkurve in Fig. 3 befindet. Aufgrund dieses Ergebnisses entscheidet dann die Steuereinrichtung, ob die Antriebsbewegung beibehalten werden kann oder umgekehrt werden muß, um zum Minimum, d. h. in die Fokusposition zu gelangen. Die Fokussierung ist dann erreicht, wenn die Signaländerung bei fortschreitender Bewegung Null wird und das Vorzeichen wechselt, d. h. beim Nulldurchgang des Signaldifferentials. Bei Erreichen dieses Nulldurchgangs wird der Antrieb 10 angehalten.

Wie oben erwähnt, entspricht der Schärfenebene des Mikroskops das Minimum des Autofokussignals. Die Autofokussteuerung würde um diesen Punkt sogenannte Regelschwingungen durchführen. Da diese Regelschwingungen aufgrund der hohen Empfindlichkeit des Auges gegenüber Intensitätsänderungen fast immer sichtbar sind, sollte die Autofokussteuerung angehalten werden. Zum Anhalten bzw. erneuten Starten der Steuerung bieten sich folgende Möglichkeiten an :

Anhaltebedingung : Der Regelvorgang wird angehalten, wenn der Motor N mal die Richtung geändert hat.

Startbedingung : Der Regelvorgang wird wieder gestartet, wenn der das Autofokussignal messende Detektor eine Intensitätsänderung ΔI feststellt. Diese Intensitätsänderung wird entweder durch eine Defokussierung oder eine Reflektivitätsänderung der Objektoberfläche hervorgerufen.

Sowohl N als auch ΔI werden von dem die Fokussierung steurnden Analog- oder Digitalrechner erkannt und ausgewertet.

Sollte am Beginn der Fokussierungsbewegung sich das Objekt weit außerhalb der Schärfenebene F, d. h. außerhalb des sogenannten Einfangbereichs (rechts in Fig. 3) befinden, so kann die Steuereinrichtung 9 aufgrund der geringen Signalsteigung im Plateaubereich erkennen, daß dies nicht der linke abfallende Teil der Signalkurve im Einfangbereich ist.

Hieraus ermittelt die Steuereinrichtung 9, daß zunächst eine relativ große Bewegung des Halters 11 auf das Mikroskop zu erfolgen muß, bis der Einfangbereich erreicht ist. Die vorstehend allgemein und funktional erläuterte Arbeitsweise der Steuereinrichtung 9 läßt eine große Anzahl verschiedener Einzelheiten der Schaltung für die Steuereinrichtung selbst zu. Dies ist jedoch dem Fachmann bekannt, so daß auf nähere Einzelheiten hierzu verzichtet werden kann. Insbesondere kann die Steuereinrichtung die Signale analog oder digital oder auch gemischt verarbeiten.

Gegenüber Fig. 1 unterscheidet sich Fig. 2 im wesentlichen dadurch, daß das Mikroskop mit Auflicht betrieben wird, d. h. die Objektebene wird aus der Beobachtungsrichtung des Mikroskops beleuchtet. Zu diesem Zweck wird das Beleuchtungsstrahlenbündel 4 etwa im rechten Winkel zur optischen Achse 1′ zwischen der Objektivlinse 1 und einer Tubuslinse 13 im Hauptstrahlengang des Mikroskops in diesen über einen Beleuchtungskondensor 3′ und einen teildurchlässigen Spiegel 12 eingespiegelt. Dieser Beleuchtungskondensor 3′ sollte vorzugsweise die gleichen oder ähnliche optische Eigenschaften (Güte u. s. w.) wie die Tubuslinse 13 aufweisen. Dadurch wird die Schärfenebene F des Mikroskops beleuchtet ; die sich im Strahlengang des Beleuchtungsstrahlenbündels 4 befindliche Meßblende MB wird dadurch in die Schärfenebene F des Mikroskops abgebildet, und man erhält dort das Zwischenbild MB′. Die Meßblende MB ist aus den gleichen Gründen wie bei Fig. 1 gegenüber der optischen Achse 1′ versetzt.

Befindet sich, wie in Fig. 2 dargestellt, das auf dem Objektträger 5′ befindliche Objekt 6, das undurchsichtig sein kann, nicht in der Schärfenebene F des Mikroskops, beispielsweise links von dieser, so wird auf der Oberfläche des Objekts 6 ein unscharfes Bild der Meßblende MB abgebildet. Das Mikroskop entwirft ein entsprechend unscharfes Bild sowohl der Meßblende MB als auch des Objekts 6. An der Detektorblende DB erscheint dann eine entsprechend unscharfe Abbildung MB″ der Meßblende MB. Ein scharfes Bild der Meßblende MB erhält man auf der Oberfläche des Objektes 6 nur dann, wenn die Objektebene in der Schärfenebene F liegt, so daß dann auch das Bild MB″ der Meßblende in der Detektorblende scharf ist und das Autofokussignal AF des Detektors 8 in der Kurve der Fig. 3 den Minimalwert einnimmt. Im übrigen ist die Steuerung des Antriebs 10 für den Objektträger 5′ entsprechend der bei der Ausführungsform gemäß Fig. 1.

Um bei unterschiedlichen Beleuchtungsverhältnissen oder schwankenden Reflektivitäten der Objekte stets das gleiche Autofokussignal AF zu erhalten, weist die Steuereinrichtung 9 gemäß Fig. 4 einen regelbaren Analogverstärker 9a für das Autofokussignal auf. Das Regelsignal z. B. für die Veränderung des Verstärkungsfaktors des Analogverstärkers 9a wird von einem Analog- oder Digitalrechner 9b erzeugt, der ferner das Steuersignal für den Antrieb 10 erzeugt. Die Ist-Intensität wird dabei mit einer nicht dargestellten Referenzsonde in der Zwischenbildebene des Mikroskops gemessen und als Referenzsignal 9d dem Verstärker 9a zugeführt. Das Referenzsignal kann auch direkt vom Detektor 8 abgeleitet werden bevor die Fokussierung beginnt. Der Verstärkungsfaktor des Verstärkers 9a wird dann auf einem geeigneten Wert eingestellt und während der Fokussierung konstant gehalten.

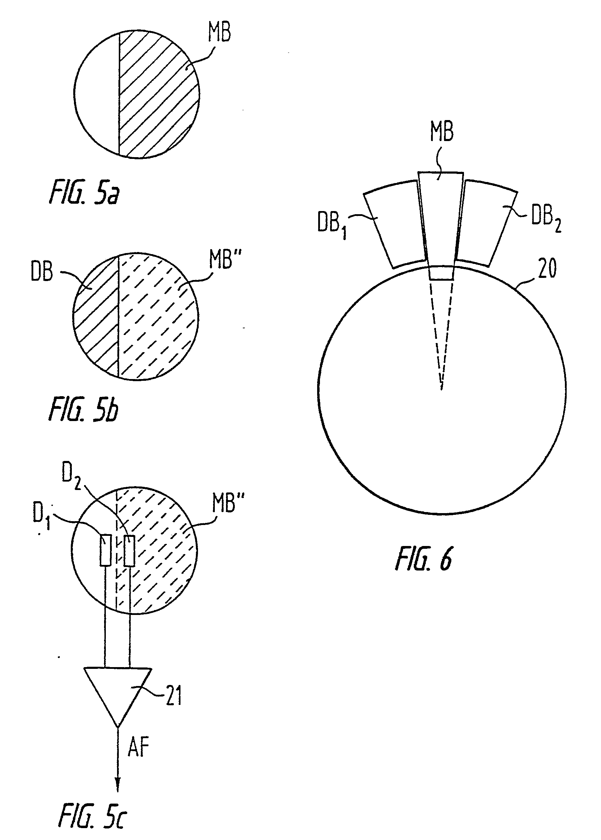

Im Zusammenhang mit den Fig. 1 und 2 ist eine abdeckende Meßblende MB mit einer dazu komplementären Detektorblende DB in Form einer Lochblende beschrieben. Diese Blenden können beispielsweise auch in Form einer einseitigen Blende gemäß Fig. 5a (Meßblende) und einer dazu komplementären einseitigen Detektorblende DB (Fig. 5b) ausgeführt sein. Anstelle der Detektorblende DB können auch zwei in geringem Abstand zueinander angeordnete Detektoren $D_1$ und $D_2$ angeordnet sein, die über eine Differenzschaltung 21 den Kontrast an der Kante eines Blendenbildes ausmessen. Bei größtem Kontrast ist danach die Meßblende scharf abgebildet. Eine derartige Anordnung ist in Fig. 5c dargestellt.

Kontrastmessungen können auch direkt im Zwischenbild ohne Meßblende durchgeführt werden ; diese Methode versagt aber bei kontrastlosen Oberflächen, wie z. B. blanken Wafern. Gemäß Fig. 6 können sowohl radiale als auch azimutale Blenden eingesetzt werden, wobei jedoch zu beachten ist, daß radiale Blenden keinen zu großen Abstand von der optischen Achse haben sollten, um Farbfehler, die zum Linsenrand hin zunehmen, zu vermeiden. Azimutale Blenden haben dagegen keine Farbfehler. Fig. 6 zeigt eine derartige azimutale Meßblende MB mit den zugehörigen Detektorblendenabschnitten $DB_1$ und $DB_2$. Ferner ist das durch die Okularblende (Lochblende mit einem Durchmesser von etwa 18 mm) freigegebene Sehfeld 20 angedeutet.

Da die erfindungsgemäße, automatische Fokussierung durch das Objektiv des Mikroskops erfolgt, nimmt die Fokussierungsgenauigkeit mit abnehmender Schärfentiefe in gleichem Maße zu, so daß man immer eine dessen Schärfentiefe entsprechende Einstellungsgenauigkeit erhält unabhängig vom Objektiv (beim Auflichtverfahren).

Diese Fokussierung ist ferner unabhängig von der Einstellung der Aperturblende, von den Beleuchtungsverhältnissen und (bei Verwendung der Meßblende) von den Oberflächeneigenschaften des Objekts. Mit zunehmender Beleuchtungsapertur ergibt sich eine Abnahme der Schärfentiefe und damit eine Verbesserung der Einstellgenauigkeit.

Dabei hat die erfindungsgemäße, automatische Fokussierung beim Auflichtverfahren (vgl. Fig. 2) gegenüber dem Durchlichtverfahren (vgl. Fig. 1) noch den Vorteil, daß das Zwischenbild MB′ nach der Vorjustierung immer in der Fokalebene des Mikroskops liegt unabhängig von der Lage und der Dicke des Objekts. Bei Objektivwechsel ist auch keine Änderung der Meßblendenjustierung nötig, da die Meßblende durch das Objektiv zunächst entsprechend seinem Abbildungsmaßstab 1 : m verkleinert in der Schärfenebene abgebildet und anschließend gemäß m : 1 vergrößert in der Ebene der Detektorblende abgebildet wird. Der Abbildungsmaßstab des Objektivs beeinflußt daher nicht Position und Größe des Meßblendenbildes MB‴. Dies entspricht einem « Herauskürzen » des Vergrößerungsmaßstabes.

## Patentansprüche

1. Einrichtung zum automatischen Fokussieren von optischen Geräten, insbesondere von Mikroskopen, mit

a) einem in den Strahlengang des Gerätes bringbaren Meßstrahlenbündel zum Beleuchten der Oberfläche eines Objekts (6),

b) einem Detektor (8) zum Ermitteln der Fokussierungsgenauigkeit des optischen Gerätes bezüglich der Oberfläche des Objektes (6) und mit

c) einer Steuereinrichtung (9) zum Verstellen der Relativlage des Objekts (6) bezüglich der Schärfenebene (F) des optischen Gerätes durch Optimieren des vom Detektor (8) erzeugten Autofokussignals (AF), wobei

d) durch das Meßstrahlenbündel eine Meßblende (MB) in den Strahlengang des optischen Gerätes so abgebildet wird, daß zumindest bei Fokussierung die Sollposition der Blendenabbildung (MB′) in der Objektebene (6) liegt, und

e) bei der in einer zur Bildebene (MB‴) des optischen Gerätes konjugierten Ebene (MB″) eine zur Meßblende (MB) komplementäre Detektorblende (DB) angeordnet ist, dadurch gekennzeichnet, daß die Meßblende (MB) gegenüber der optischen Achse (1′) des optischen Gerätes seitlich so weit versetzt ist, daß ihr Bild (MB‴) im Okular (2) außerhalb des Sehfeldes (20) ist.

2. Einrichtung nach Anspruch 1, gekennzeichnet durch einen im Strahlengang des optischen Gerätes zwischen dem Objektiv (1) und dem Okular (2) angeordneten Strahlteiler (7) zum Auskoppeln des Meßstrahlenbündels aus dem Hauptstrahlengang.

3. Einrichtung nach Anspruch 1 oder 2, wobei das optische Gerät mit Durchlicht betrieben wird, dadurch gekennzeichnet,

a) daß das Meßstrahlenbündel im wesentlichen parallel zum Beleuchtungsstrahlenbündel (4) verläuft,

b) daß die Meßblende (MB) in Strahlrichtung vor einem Kondensor (3) und dieser vor dem Objektträger (5) angeordnet ist und

c) daß die Abbildung (MB') der Meßblende (MB) in die Gegenstandsebene des Objektträgers (5) voreingestellt wird (Fig. 1).

4. Einrichtung nach Anspruch 3, dadurch gekennzeichnet, daß der Objektträger (5) mit Objekt (6), Kondensorlinse (3) und Meßblende (MB) gemeinsam relativ zur Schärfenebene (F) des optischen Gerätes in Richtung der optischen Achse (1') bewegbar sind.

5. Einrichtung nach Anspruch 1 oder 2, wobei das optische Gerät mit Auflicht betrieben wird, dadurch gekennzeichnet, daß das Meßstrahlenbündel in Strahlrichtung hinter der Objektivlinse (1) in den Strahlengang des optischen Gerätes eingespiegelt und durch die Objektivlinse (1) in die Schärfenebene (F) des optischen Gerätes abgebildet wird (Fig. 2).

6. Einrichtung nach Anspruch 5, dadurch gekennzeichnet, daß der Objektträger (5') mit dem Objekt (6) in Richtung der optischen Achse (1') des optischen Gerätes relativ zur Schärfenebene (F) bewegbar ist.

7. Einrichtung nach einem der Ansprüche 1 bis 6, dadurch gekennzeichnet, daß die Meßblende (MB) als Lochblende oder als Abdeckblende und die Detektorblende (DE) als dazu komplementäre Abdeck- bzw. Lochblende ausgebildet sind.

8. Einrichtung nach einem der Ansprüche 1 bis 6, dadurch gekennzeichnet, daß die Meßblende (MB) als einseitige Blende ausgebildet ist (Fig. 5a).

9. Einrichtung nach Anspruch 8, dadurch gekennzeichnet, daß die Detektorblende (DB) als zur Meßblende (MB) komplementäre einseitige Blende ausgebildet ist (Fig. 5b).

10. Einrichtung nach einem der Ansprüche 1 bis 6, dadurch gekennzeichnet, daß die Meßblende (MB) als bezüglich des Sehfeldes (20) azimutale Blende ausgebildet ist und die Detektorblende (DB) zwei im azimutalen Abstand angeordnete komplementäre Blendenabschnitte (DB₁, DB₂) aufweist (Fig. 6).

11. Einrichtung nach einem der Ansprüche 1 bis 10, gekennzeichnet durch mehrere Meßblenden (MB) und mehrere dazu komplementäre Detektorblenden (DB) mit zugehörigen Detektoren (8).

12. Einrichtung nach einem der Ansprüche 1 bis 11, dadurch gekennzeichnet, daß mehrere Detektorblenden (DB) mit zugehörigen Detektoren (8) in verschiedenen Bildebenen angeordnet sind.

13. Einrichtung nach einem der Ansprüche 1 bis 12, dadurch gekennzeichnet, daß die die Stellbewegung steuernde Steuereinrichtung (9) einen das Autofokussignal (AF) verstärkenden, regelbaren Verstärker (9a) und einen Analog- oder Digitalrechner (9b) zum Weiterverarbeiten des verstärkten Autofokussignals (AF) und Erzeugen des Stellsignals für den Antrieb (10) aufweist.

14. Einrichtung nach Anspruch 13, dadurch gekennzeichnet, daß der Rechner (9b) ein Regelsignal für den Verstärker (9a) erzeugt.

15. Einrichtung nach Anspruch 14, gekennzeichnet durch eine Referenzsonde in der Zwischenbildebene des optischen Gerätes zum Erzeugen eines Referenzsignals für den Verstärker (9a).

16. Modifikation der Einrichtung nach einem der Ansprüche 1 bis 15, dadurch gekennzeichnet, daß anstelle einer mechanischen Detektorblende (DB) in der Bildebene mindestens zwei den Bildkontrast der Meßblende (MB) messende Detektoren vorgesehen sind (Fig. 5c).

## Claims

1. Device for the automatic focussing of optical instruments and particularly of microscopes, comprising

(a) a measuring beam, which can be brought into the radiation path of the instrument, for illuminating the surface of an object (6),

(b) a detector (8) for determining the focussing accuracy of the optical instrument as regards the surface of the object (6), and comprising

(c) a control device (9) for adjusting the relative position of the object (6) with respect to the focussing plane (F) of the optical instrument by optimising the autofocus signal (AF) generated by the detector (8), wherein

(d) a measuring diaphragm (MB) is imaged by the measuring beam into the radiation path of the optical instrument in such a manner that the nominal position of the diaphragm image (MB') is located on the plane of the object (6) at least when focussed, and

(e) wherein a detector diaphragm (DB), which is complementary to the measuring diaphragm (MB), is arranged on a plane (MB") which is conjugated to the image plane (MB"') of the optical instrument, characterized in that the measuring diaphragm (MB) is laterally offset as regards the optical axis (1') of the optical instrument to such an extent that the diaphragm image (MB"') is in the eyepiece (2) outside the field of view (20).

2. Device according to claim 1, characterized by a beam splitter (7), which is arranged in the radiation path of the optical instrument between the objective (1) and the eyepiece (2), for decoupling the measuring beam from the main radiation path.

3. Device according to claim 1 or 2, in which the optical instrument is operated with transmitted light, characterized in that

(a) the measuring beam is essentially parallel to the illuminating beam (4),

(b) the measuring diaphragm (MB) lies in the beam path in front of a condenser (3), the latter being in front of the object holder (5),

(c) the image (MB') of the measuring diaphragm (MB) is preset onto the object plane of the object holder (5) (Figure 1).

4. Device according to claim 3, characterized in that the object holder (5) can be moved in the direction of the optical axis (1') and relative to the focus plane (F) of the optical instrument, this being a joint movement together with the object (6), the condenser lens (3) and the measuring diaphragm (MB).

5. Device according to claim 1 or 2, in which the optical instrument is operated with incident light, characterized in that the measuring beam is reflected in the beam direction behind the objective lens (1) onto the radiation path of the optical instruments and is imaged through the objective lens (1) onto the focus plane (F) of the optical instrument (Figure 2).

6. Device according to claim 5, characterized in that the object holder (5') can be moved together with the object (6) in the direction of the optical axis (1') of the optical instrument, relative to the focus plane (F).

7. Device according to one of claims 1 to 6, characterized in that the measuring diaphragm (MB) is constructed as a hole diaphragm or as a masking diaphragm and the detector diaphragm (DB) is constructed as a masking or hole diaphragm which is complementary to the former.

8. Device according to one of claims 1 to 6, characterized in that the measuring diaphragm (MB) is constructed as a unilateral diaphragm (Figure 5a).

9. Device according to claim 8, characterized in that the detector diaphragm (DB) is constructed as a unilateral diaphragm which is complementary to the measuring diaphragm (MB) (Figure 5b).

10. Device according to one of claims 1 to 6, characterized in that the measuring diaphragm (MB) is constructed as a diaphragm which is azimuthal as regards the field of view (20) and that the detector diaphragm (DB) is provided with two complementary diaphragm sections (DB$_1$, DB$_2$) which are arranged with azimuthal spacing (Figure 6).

11. Device according to one claims 1 to 10, characterized by several measuring diaphragms (MB) and several detector diaphragms (DB) which are complementary thereto, including their corresponding detectors (8).

12. Device according to one of claims 1 to 11, characterized in that several detector diaphragms (DB) and their corresponding detectors (8) are arranged on different image planes.

13. Device according to one of claims 1 to 12, characterized in that the control device (9) which controls the adjusting movement has a controllable amplifier (9a) which amplifies the autofocus signal (AF), and an analog or digital computer (9b) for further processing the amplified autofocus signal (AF) and for generating the adjusting signal for the drive (10).

14. Device according claim 13, characterized in that the computer (9b) generates a control signal for the amplifier (9a).

15. Device according to claim 14, characterized by a reference probe in the intermediate image plane of the optical instrument for generating a reference signal for the amplifier (9a).

16. Modification of the device according to one of claims 1 to 15, characterized in that, instead of one mechanical detector diaphragm (DB), at least two detectors measuring the image contrast of the measuring diaphragm (MB) are provided on the image plane (Figure 5c).

**Revendications**

1. Dispositif pour la mise au point automatique d'appareils optiques, notamment de microscopes, comprenant

a) un faisceau lumineux de mesure pouvant être amené dans le trajet optique de l'appareil en vue de l'éclairage de la surface d'un objet (6),

b) un détecteur (8) en vue de la détermination de la précision de la mise au point de l'appareil optique par rapport à la surface de l'objet (6) et

c) un dispositif de commande (9) pour le réglage de la position relative de l'objet (6) par rapport au plan de netteté (F) de l'appareil optique par optimisation du signal de mise au point automatique (AF) produit par le détecteur (8), moyennant quoi

d) par le faisceau lumineux de mesure, il est formé une image de diaphragme de mesure (MB) dans le trajet optique de l'appareil optique, tout au moins lors de la mise au point, la position nominale de l'image (MB') du diaphragme se situe dans le plan objet (6) et

e) dans lequel dispositif, un écran de détection (DB) complémentaire du diaphragme de mesure (MB) est disposé dans un plan (MB'') conjugué d'un plan image (MB''') de l'appareil optique, caractérisé en ce que le diaphragme de mesure (MB) est décalé latéralement par rapport à l'axe optique (1') de l'appareil optique avec une amplitude telle que son image (MB''') dans l'oculaire (2) se trouve en dehors du champ visuel (20).

2. Dispositif selon la revendication 1, caractérisé par un séparateur de faisceau (7), disposé sur le trajet optique de l'appareil optique entre l'objectif (1) et l'oculaire (2), pour dévier le faisceau lumineux de mesure du trajet optique principal.

3. Dispositif selon la revendication 1 ou 2, dans lequel l'appareil optique fonctionne avec transmission de la lumière, caractérisé en ce que

a) le faisceau lumineux de mesure est sensiblement parallèle au faisceau lumineux d'éclairage (4),

b) le diaphragme de mesure (MB) est situé, dans le sens de propagation des rayons, en amont d'un condenseur (3) et celui-ci en amont du porte-objet (5) et

c) l'image (MB') du diaphragme de mesure (MB) est préalablement mise au point dans le plan objet du porte-objet (5) (fig. 1).

4. Dispositif selon la revendication 3, caractérisé en ce que le porte-objet (5) avec l'objet (6), la lentille de condenseur (3) et le diaphragme de mesure (MB) sont conjointement déplaçables par rapport au plan de netteté (F) de l'appareil optique dans la direction de l'axe optique (1').

5. Dispositif selon la revendication 1 ou 2, dans lequel l'appareil optique fonctionne par réflexion, caractérisé en ce que le faisceau lumineux de mesure est réfléchi, dans le sens de propagation des rayons, derrière la lentille de l'objectif (1) dans le trajet optique de l'appareil optique et son image est formée par la lentille de l'objectif (1) dans le plan de netteté (F) de l'appareil optique (fig. 2).

6. Dispositif selon la revendication 5, caractérisé en ce que le porte-objet (5') avec l'objet (6) est déplaçable dans la direction de l'axe optique (1') de l'appareil optique par rapport au plan de netteté (F).

7. Dispositif selon l'une des revendications 1 à 6, caractérisé en ce que le diaphragme de mesure (MB) est réalisé sous forme d'écran perforé ou sous forme de diaphragme masquable et que l'écran de détection (MB) est réalisé sous forme de diaphragme masquable, respectivement sous forme d'écran perforé complémentaire du précédent.

8. Dispositif selon l'une des revendications 1 à 6, caractérisé en ce que le diaphragme de mesure (MB) est réalisé sous forme de diaphragme asymétrique (fig. 5a).

9. Dispositif selon la revendication 8, caractérisé en ce que l'écran de détection (DB) est réalisé sous forme d'écran asymétrique complémentaire du diaphragme de mesure (MB) (fig. 5b).

10. Dispositif selon l'une des revendications 1 à 6, caractérisé en ce que le diaphragme de mesure (MB) est réalisé sous forme de diaphragme azimutal par rapport au champ visuel (20) et que l'écran de détection (DB) présente deux sections d'écran complémentaires (DB₁, DB₂) agencées à distance azimutale (fig. 6).

11. Dispositif selon l'une des revendications 1 à 10, caractérisé par plusieurs diaphragmes de mesure (MB) et plusieurs écrans de détection (DB) complémentaires de ceux-ci avec des détecteurs correspondants (8).

12. Dispositif selon l'une des revendications 1 à 11, caractérisé en ce que plusieurs écrans de détection (DB) avec des détecteurs correspondants (8) sont disposés dans des plans image différents.

13. Dispositif selon l'une des revendications 1 à 12, caractérisé en ce que le dispositif de commande (9) commandant la course de réglage comporte un amplificateur (9a) réglable, amplifiant le signal de mise au point automatique (AF) et un calculateur analogique ou numérique (9b) pour le traitement ultérieur du signal de mise au point automatique (AF) amplifié et la production du signal de réglage pour le mécanisme d'entraînement (10).

14. Dispositif selon la revendication 13, caractérisé en ce que le calculateur (9b) produit un signal de réglage pour l'amplificateur (9a).

15. Dispositif selon la revendication 14, caractérisé par une sonde de référence située dans le plan d'image intermédiaire de l'appareil optique pour la production d'un signal de référence pour l'amplificateur (9a).

16. Variante du dispositif selon l'une des revendications 1 à 15, caractérisé en ce qu'à la place d'un écran de détection mécanique (DB) situé dans le plan image, il est prévu au moins deux détecteurs mesurant le contraste de l'image du diaphragme de mesure (MB) (fig. 5c).

FIG. 1

FIG. 2

AF

Intensität

Plateau | Einfangbereich | Plateau

25    50    75    100    125    μm

Fokussierungsweg

*FIG. 3*

9

AF

9c

9a    9b    10

9d

*FIG. 4*

2

MB

FIG. 5a

DB          MB"

FIG. 5b

MB

DB₁          DB₂

20

FIG. 6

D₂
D₁          MB"

21

AF

FIG. 5c